(19) Europäisches Patentamt
European Patent Office
Office européen des brevets

(11) **EP 4 693 104 A1**

(12) **EUROPÄISCHE PATENTANMELDUNG**

(43) Veröffentlichungstag:
**11.02.2026  Patentblatt 2026/07**

(51) Internationale Patentklassifikation (IPC):
**G06N 3/0455** (2023.01)      **G06N 3/0475** (2023.01)

(21) Anmeldenummer: **24192947.0**

(52) Gemeinsame Patentklassifikation (CPC):
**G06N 3/045; G06N 3/0455; G06N 3/0475**

(22) Anmeldetag: **05.08.2024**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Robert Bosch GmbH
70442 Stuttgart (DE)**

(72) Erfinder:
• **Gerwinn, Sebastian
  71229 Leonberg (DE)**
• **Schiegg, Martin
  70825 Korntal-Muenchingen (DE)**

Bemerkungen:
Geänderte Patentansprüche gemäss Regel 137(2) EPÜ.

(54) **VORRICHTUNG UND COMPUTERIMPLEMENTIERTES VERFAHREN ZUR VERARBEITUNG VON SENSORDATEN**

(57) Vorrichtung und computerimplementiertes Verfahren zur Verarbeitung von Sensordaten, insbesondere Zeitreihen von Sensordaten, wobei die Sensordaten in einem ersten Kanal bereitgestellt werden, wobei der erste Kanal einen ersten Teil der Sensordaten, insbesondere eine erste Zeitreihe von Sensordaten, umfasst, wobei dem ersten Kanal ein erster Text (204) zugeordnet ist, der die Sensordaten und/oder eine Dimension der Sensordaten im ersten Kanal charakterisiert, wobei abhängig vom ersten Text (204), insbesondere mit einem Text-Kodierer (402), eine erste Textkodierung (404) bestimmt wird, wobei abhängig von der ersten Textkodierung (404), insbesondere mit einem neuronalen Netzwerk (406), eine erste Kanalpositionskodierung (408) bestimmt wird, wobei abhängig von einem vorgegebenen Text, insbesondere mit dem oder einem Text-Kodierer (402), eine zweite Textkodierung (404) bestimmt wird, wobei der vorgegebene Text vorherzusagende Sensordaten und/oder eine Dimension von vorherzusagenden Sensordaten charakterisiert, wobei abhängig von der zweiten Textkodierung (404), insbesondere mit dem oder einem neuronalen Netzwerk (406), eine zweite Kanalpositionskodierung (408) bestimmt wird, wobei eine erste Eingangsgröße (306) eines Kodierers abhängig von Sensordaten aus dem ersten Kanal und abhängig von der ersten Kanalpositionskodierung (408) bestimmt wird, wobei mit dem Kodierer abhängig von der ersten Eingangsgröße (306) des Kodierers (302) eine erste Eingangsgröße eines Dekodierers bestimmt wird (610, 710), wobei eine zweite Eingangsgröße des Dekodierers abhängig von der zweiten Kanalpositionskodierung (408) bestimmt wird, und wobei mit dem Dekodierer abhängig von der ersten Eingangsgröße des Dekodierers und der zweiten Eingangsgröße des Dekodierers Sensordaten, insbesondere eine Zeitreihe von Sensordaten, vorhergesagt werden.

Fig. 4

**Beschreibung**

Stand der Technik

Die Erfindung betrifft eine Vorrichtung und ein computerimplementiertes Verfahren zur Verarbeitung von Sensordaten.

Zur Verarbeitung von physikalischen Größen können Modelle, wie z.B. Zhang, Yunhao, and Junchi Yan. "Crossformer: Transformer utilizing cross-dimension dependency for multivariate time series forecasting." The Eleventh International Conference on Learning Representations. 2022., url: https://open-review.net/pdf?id=vSVLM2j9eie eingesetzt werden.

Wenn ein Modell, das auf bestimmten physikalischen Größen, insbesondere multivariaten Zeitreihen einer bestimmten Menge von physikalischen Größen, trainiert wurde, auf eine neue Modellierungsaufgabe mit veränderten physikalischen Größen angepasst werden soll, müssen bisher viele Parameter durch Finetuning angepasst werden, da unterschiedliche Dimensionen und gelernte Dynamiken nicht auf die neuen physikalischen Größen generalisieren.

Offenbarung der Erfindung

Das computerimplementierte Verfahren zur Verarbeitung von Sensordaten, insbesondere Zeitreihen von Sensordaten, sieht vor, dass die Sensordaten in einem ersten Kanal bereitgestellt werden, wobei der erste Kanal einen ersten Teil der Sensordaten, insbesondere eine erste Zeitreihe von Sensordaten, umfasst, wobei dem ersten Kanal ein erster Text zugeordnet ist, der die Sensordaten und/oder eine Dimension der Sensordaten im ersten Kanal charakterisiert, wobei abhängig vom ersten Text, insbesondere mit einem Text-Kodierer, eine erste Textkodierung bestimmt wird, wobei abhängig von der ersten Textkodierung, insbesondere mit einem neuronalen Netzwerk, eine erste Kanalpositionskodierung bestimmt wird, wobei abhängig von einem vorgegebenen Text, insbesondere mit dem oder einem Text-Kodierer, eine zweite Textkodierung bestimmt wird, wobei der vorgegebene Text vorherzusagende Sensordaten und/oder eine Dimension von vorherzusagenden Sensordaten charakterisiert, wobei abhängig von der zweiten Textkodierung, insbesondere mit dem oder einem neuronalen Netzwerk, eine zweite Kanalpositionskodierung bestimmt wird, wobei eine erste Eingangsgröße eines Kodierers abhängig von Sensordaten aus dem ersten Kanal und abhängig von der ersten Kanalpositionskodierung bestimmt wird, wobei mit dem Kodierer abhängig von der ersten Eingangsgröße des Kodierers eine erste Eingangsgröße eines Dekodierers bestimmt wird, wobei eine zweite Eingangsgröße des Dekodierers abhängig von der zweiten Kanalpositionskodierung bestimmt wird, und wobei mit dem Dekodierer abhängig von der ersten Eingangsgröße des Dekodierers und der zweiten Eingangsgröße des Dekodierers Sensordaten, insbesondere eine Zeitreihe von Sensordaten vorhergesagt werden. Das Verfahren verwendet z.B. den in "In Attention Is All You Need" ar-Xiv:1706.03762 beschrieben Transformer, wobei der Kodierer an die erste Eingangsgröße des Kodierers und die erste Eingangsgröße des Dekodierers als Ausgang des Kodierers angepasst ist, und der Dekodierer an die erste Eingangsgröße des Dekodierers und die zweite Eingangsgröße des Dekodierers angepasst ist. Das neuronale Netzwerk weist z.B. ein MLP, einen weiteren Transformer, oder ein ResNet auf. Der Text-Kodierer ist z.B. ein vortrainierter Text-Encoder eines Large Language Models (LLMs), z.B. ein Transformer. Der Text-Kodierer ist z.B. ein vortrainierter Text-Encoder eines Fondation Models, z.B. word2vec oder glove. Die im Verfahren verwendete Kombination von Text-Kodierer, neuronalem Netzwerk, Kodierer und Dekodierer stellt ein Modell dar. Das Modell erzielt, nach einem Training auf Trainingsdaten für eine Modellierungsaufgabe, unter gleich vielen Trainingsdaten für eine neue Modellierungsaufgabe eine höhere Genauigkeit. Das Modell ist nach dem Training auf Trainingsdaten für die Modellierungsaufgabe ohne weiteres Training (zero-shot), oder mit wenigen Trainingsdaten (few-shot), auf die neue Modellierungsaufgabe anpassbar.

Die vorhergesagten Sensordaten können Sensordaten des ersten Kanals oder eines zweiten Kanals sein.

Es kann vorgesehen sein, dass die Sensordaten im ersten Kanal und im zweiten Kanal bereitgestellt werden, wobei der zweite Kanal einen zweiten Teil der Sensordaten, insbesondere eine zweite Zeitreihe von Sensordaten, umfasst, wobei dem zweiten Kanal ein zweiter Text zugeordnet ist, der die Sensordaten und/oder eine Dimension der Sensordaten im zweiten Kanal charakterisiert, wobei abhängig vom zweiten Text, insbesondere mit einem Text-Kodierer, eine dritte Textkodierung bestimmt wird, wobei abhängig von der dritten Textkodierung, insbesondere mit einem neuronalen Netzwerk, eine dritte Kanalpositionskodierung bestimmt wird, wobei eine zweite Eingangsgröße des Kodierers abhängig von Sensordaten aus dem zweiten Kanal und abhängig von der dritten Kanalpositionskodierung bestimmt wird, wobei mit dem Kodierer abhängig von den Eingangsgrößen des Kodierers die erste Eingangsgröße des Dekodierers bestimmt wird.

Die Sensordaten in einem jeweiligen Kanal charakterisieren z.B. eine physikalische Größe. Beispiele für die physikalische Größe sind eine Stromstärke, eine Spannung, einen Widerstand, eine Temperatur, eine Feuchtigkeit, eine Gaskonzentration, einen Druck, eine Geschwindigkeit, eine Kraft, ein Drehmoment, eine Drehzahl. Die Zeitreihen stellen z.B. einen zeitlichen Verlauf der Werte der jeweiligen physikalischen Größe dar. Der jeweilige Text umfasst z.B. den Namen der jeweiligen physikalischen Größe. Der jeweilige Text umfasst z.B. den Namen der Dimension der jeweiligen physikalischen Größe.

Die Sensordaten aus dem ersten Kanal können direkt zur Vorhersage der Sensordaten, z.B. von Sensordaten aus dem ersten oder dem zweiten Kanal, verwendet werden.

Es kann vorgesehen sein, dass abhängig von Sensordaten aus dem zweiten Kanal, insbesondere mit einem neuronalen Netzwerk, eine Kodierung von Sensordaten aus dem zweiten Kanal bestimmt wird, wobei die zweite Eingangsgröße des Kodierers abhängig von der Kodierung der Sensordaten aus dem zweiten Kanal und abhängig von der dritten Kanalpositionskodierung bestimmt wird.

Es kann vorgesehen sein, dass abhängig von Sensordaten aus dem ersten Kanal, insbesondere mit einem neuronalen Netzwerk, eine Kodierung von Sensordaten aus dem ersten Kanal bestimmt wird, wobei die erste Eingangsgröße des Kodierers abhängig von der Kodierung der Sensordaten aus dem ersten Kanal und abhängig von der ersten Kanalpositionskodierung bestimmt wird. Das bedeutet, die kodierte Sensordaten aus dem ersten Kanal werden zur Vorhersage der Sensordaten, insbesondere der Sensordaten aus dem zweiten Kanal, verwendet. Das neuronale Netzwerk, mit dem die Kodierung der Sensordaten bestimmt wird, umfasst z.B. eine lineare Schicht.

Es kann vorgesehen sein, dass ein Segment der Sensordaten des ersten Kanals zur Bestimmung der ersten Eingangsgröße des Kodierers bereitgestellt wird, wobei dem Segment eine erste Zeitangabe zugeordnet ist, die einen Zeitraum der Erfassung der Sensordaten des Segments des ersten Kanals charakterisiert, wobei abhängig von der ersten Zeitangabe, insbesondere mit einem neuronalen Netzwerk, eine erste Zeitpositionskodierung bestimmt wird, und wobei die erste Eingangsgröße des Kodierers abhängig von den Sensordaten aus dem Segment der Sensordaten des ersten Kanals und abhängig von der ersten Kanalpositionskodierung und abhängig von der ersten Zeitpositionskodierung bestimmt wird. Das bedeutet, die Vorhersage der Sensordaten basiert auf den im durch die erste Zeitangabe definierten Zeitraum erfassten Sensordaten. Das neuronale Netzwerk, mit dem die erste Zeitpositionskodierung bestimmt wird, umfasst z.B. eine lineare Schicht.

Die Sensordaten aus dem Segment des ersten Kanals können direkt zur Vorhersage der Sensordaten aus dem Segment, insbesondere des zweiten Kanals, verwendet werden.

Es kann vorgesehen sein, dass abhängig von Sensordaten aus dem ersten Kanal, insbesondere mit einem neuronalen Netzwerk, eine Kodierung von Sensordaten aus dem ersten Kanal bestimmt wird, wobei die erste Eingangsgröße des Kodierers abhängig von der Kodierung der Sensordaten aus dem Segment der Sensordaten des ersten Kanals und der ersten Kanalpositionskodierung und der ersten Zeitpositionskodierung bestimmt wird. Das bedeutet, die kodierte Sensordaten aus dem Segment des ersten Kanals werden zur Vorhersage der Sensordaten, insbesondere der Sensordaten aus dem Segment des zweiten Kanals, verwendet. Das neuronale Netzwerk mit dem die Kodierung der Sensordaten aus dem Segment bestimmt wird, umfasst z.B. eine lineare Schicht.

Es kann vorgesehen sein, dass mit dem Dekodierer Sensordaten aus einem Segment der vorhergesagten Sensordaten bestimmt werden, wobei dem Segment der vorhergesagten Sensordaten eine zweite Zeitangabe zugeordnet ist, die einen Zeitraum der Sensordaten im Segment der vorhergesagten Sensordaten charakterisiert, wobei abhängig von der zweiten Zeitangabe, insbesondere mit demselben neuronalen Netzwerk mit dem die erste Zeitpositionskodierung bestimmt wird, oder mit einem neuronalen Netzwerk, eine zweite Zeitpositionskodierung bestimmt wird, und wobei die zweite Eingangsgröße des Dekodierers, abhängig von der zweiten Kanalpositionskodierung und abhängig von der zweiten Zeitpositionskodierung bestimmt wird. Das bedeutet, es wird die Vorhersage für die Sensordaten im durch die zweite Zeitangabe definierten Zeitraum bestimmt. Das neuronale Netzwerk mit dem die zweite Zeitpositionskodierung bestimmt wird, umfasst z.B. eine lineare Schicht.

Es kann vorgesehen sein, dass eine die zweite Zeitangabe umfassende Nutzereingabe erfasst wird. Die Nutzereingabe gibt vor, für welches Segment die Vorhersage der Sensordaten bestimmt wird.

Beispielsweise ist vorgesehen, dass die Zeitangabe einen Start und ein Ende des Zeitraums charakterisiert, oder dass die Zeitangabe einen Zeitpunkt oder Zeitindex umfasst, der dem Zeitraum zugeordnet ist.

Es kann vorgesehen sein, dass eine Referenz für die vorhergesagten Sensordaten bereitgestellt wird, insbesondere Sensordaten aus dem zweiten Kanal, wobei der Kodierer und/oder der Dekodierer abhängig von einem Unterschied zwischen der Referenz und den vorhergesagten Sensordaten trainiert werden und/oder wobei abhängig von einem Unterschied zwischen der Referenz und den vorhergesagten Sensordaten eine Anomalie erkannt oder eine Kalibrierung durchgeführt wird. Durch das Training wird das Modell für eine Modellierungsaufgabe trainiert. Der Unterschied zwischen den in im zweiten Kanal enthaltenen erfassten Sensordaten und den für den zweiten Kanal vorhergesagten Sensordaten ermöglicht es, eine Anomalie zu erkennen oder eine Kalibrierung durchzuführen.

Es kann vorgesehen sein, dass eine den vorgegebenen Text umfassende Nutzereingabe erfasst wird. Die Nutzereingabe gibt vor, welche Sensordaten vorhergesagt werden.

Es kann vorgesehen sein, dass die vorhergesagten Sensordaten ausgegeben werden, insbesondere die vorhergesagte Zeitreihe ausgegeben wird. Die ausgegebenen Sensordaten stellen eine Vorhersage von Sensordaten eines nicht messbaren Kanals oder des zweiten Kanals dar.

Eine Vorrichtung zur Verarbeitung von Sensordaten, insbesondere Zeitreihen von Sensordaten, sieht vor, dass die Vorrichtung wenigstens einen Prozessor und wenigstens einen Speicher umfasst, wobei der wenigstens eine Prozessor ausgebildet ist, Instruktionen auszuführen, bei deren Ausführung die Vorrichtung das Verfahren nach einem der vorherigen Ansprüche ausführt, wobei der Speicher die Instruktionen speichert.

Das Computerprogramm umfasst von einem Computer ausführbare Instruktionen, bei deren Ausführung durch den Computer der Computer das Verfahren ausführt.

Weitere Beispiele sind der folgenden Beschreibung und der Zeichnung entnehmbar. In der Zeichnung zeigt:

Fig. 1 eine schematische Darstellung einer Vorrichtung zur Verarbeitung von Sensordaten,
Fig. 2 eine schematische Darstellung von Sensordaten,
Fig. 3 eine schematische Darstellung eines ersten Teils eines Modells zur Verarbeitung der Sensordaten,
Fig. 4 eine schematische Darstellung eines zweiten Teils des Modells,
Fig. 5 eine schematische Darstellung eines dritten Teils des Modells,
Fig. 6 ein Flussdiagramm mit Schritten eines ersten Beispiels für ein Verfahren zur Verarbeitung von Sensordaten,
Fig. 7 ein Flussdiagramm mit Schritten eines zweiten Beispiels für das Verfahren zur Verarbeitung von Sensordaten.

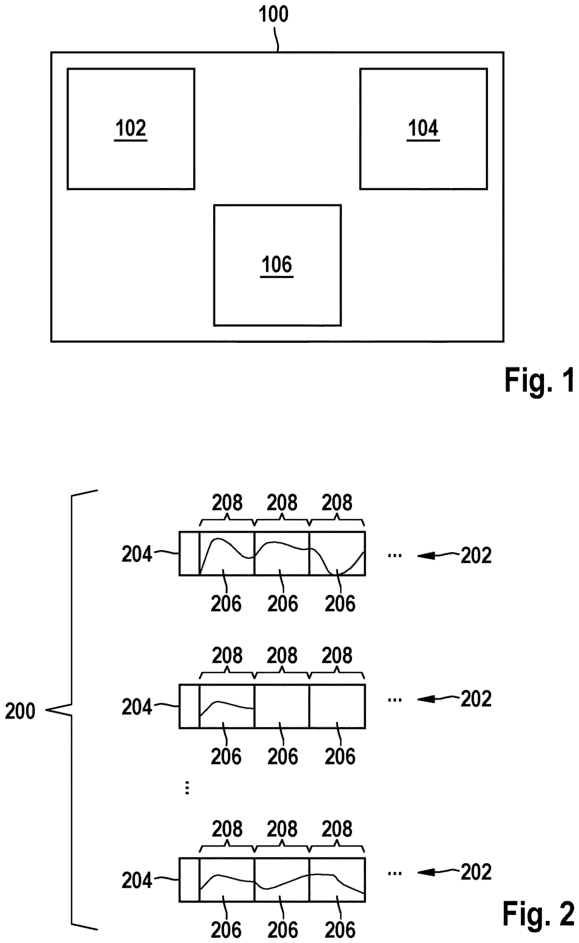

In Figur 1 ist eine Vorrichtung 100 zur Verarbeitung von Sensordaten schematisch dargestellt. Die Vorrichtung 100 umfasst wenigstens einen Prozessor 102 und wenigstens einen Speicher 104.

Der wenigstens eine Prozessor 102 ist ausgebildet, Instruktionen auszuführen, bei deren Ausführung die Vorrichtung 100 ein Verfahren zur Verarbeitung der Sensordaten ausführt. Der wenigstens eine Speicher 104 ist ausgebildet, die Instruktionen zu speichern.

In Figur 2 sind Sensordaten 200 schematisch dargestellt.

Die Sensordaten 200 sind z.B. Zeitreihen von Sensordaten. Die Zeitreihen sind z.B. multivariate Zeitreihen.

Multivariate Zeitreihen bestehen aus einer Vielzahl von univariaten Zeitreihendaten. Die multivariaten Zeitreihen umfassen z.B. mehrere physikalische Größen, die gleichzeitig über einen Zeitverlauf vermessen wurden. Die univariaten Zeitreihen umfassen z.B. jeweils eine einzelne physikalische Größe, die über den Zeitverlauf vermessen wurde.

Eine multivariate Zeitreihe $x_{1:T;1:D} \in R^{D \times T}$ der Länge T und D Sensordaten, z.B. D physikalische Größen ist z.B. angegeben als

$$x_{1:T,1:D} = \left\{ x_{t,d} \mid 1 \le t \le T, 1 \le d \le D \right\}$$

Die Sensordaten 200 werden in Kanälen 202 bereitgestellt. D.h. die multivariate Zeitreihe umfasst D Kanäle d.

Die Kanäle 202 umfassen jeweils einen Teil der Sensordaten 200.

Beispielsweise umfasst ein erster Kanal einen ersten Teil der Sensordaten 200. Die Sensordaten im ersten Teil der Sensordaten charakterisieren im Beispiel eine erste physikalische Größe. Der erste Kanal 202 umfasst z.B. eine erste Zeitreihe von Sensordaten 200.

Beispielsweise umfasst ein zweiter Kanal einen zweiten Teil der Sensordaten 200. Die Sensordaten im zweiten Teil der Sensordaten charakterisieren im Beispiel eine zweite physikalische Größe. Der zweite Kanal 202 umfasst z.B. eine zweite Zeitreihe von Sensordaten 200.

Die Sensordaten 200 in einem ersten Segment des ersten Kanals 202 sind im Beispiel bekannt. Die Sensordaten in einem zweiten Segment und einem dritten Segment des ersten Kanals 202, die an das erste Segment des ersten Kanals 202 anschließen, sind im Beispiel bekannt.

Die Sensordaten 200 in einem ersten Segment des zweiten Kanals 202 sind im Beispiel bekannt. Die Sensordaten in einem zweiten Segment und einem dritten Segment des zweiten Kanals 202, die an das erste Segment des zweiten Kanals 202 anschließen, sind im Beispiel unbekannt.

Die Sensordaten 200 in einem ersten Segment eines dritten Kanals 202 sind im Beispiel bekannt. Die Sensordaten in einem zweiten Segment und einem dritten Segment des dritten Kanals 202, die an das erste Segment des dritten Kanals 202 anschließen, sind im Beispiel bekannt.

Das erste Segment der jeweiligen Kanäle umfasst im Beispiel im selben Zeitraum erfasste Sensordaten. Die anschließenden Segmente weisen im Beispiel dieselbe Länge auf wie der Zeitraum der ersten Segmente.

Den Kanälen ist jeweils ein Text 204 zugeordnet, der die Sensordaten im jeweiligen Kanal und/oder eine Dimension der Sensordaten im jeweiligen Kanal charakterisiert.

Beispielsweise ist dem ersten Kanal 202 ein erster Text 204 zugeordnet, der die Sensordaten und/oder eine Dimension der Sensordaten im ersten Kanal 202 charakterisiert.

Beispielsweise ist dem zweiten Kanal 202 ein zweiter Text 204 zugeordnet, der die Sensordaten und/oder eine Dimension der Sensordaten im zweiten Kanal 202 charakterisiert.

Die Sensordaten 202 können mehr als zwei Kanäle insbesondere für mehr als zwei verschiedene physikalische Größen umfassen, wobei ein jeweiliger Text 204 vorgesehen ist.

Die Sensordaten 200 sind in Segmente unterteilt. In Figur 2 sind beispielhafte Segmente 206 der Sensordaten 200 dargestellt. Die Segmente 206 umfassen Teile der Sensordaten 200 aus jeweils einem der Kanäle, insbesondere Teile der Zeitreihe des jeweiligen Kanals.

Die Segmente 206 umfassen die Sensordaten 200 aus jeweils einen Zeitraum 208. Im Beispiel sind Segmente 206 vorgesehen, die jeweils einen Zeitraum 208 derselben Zeitdauer umfassen.

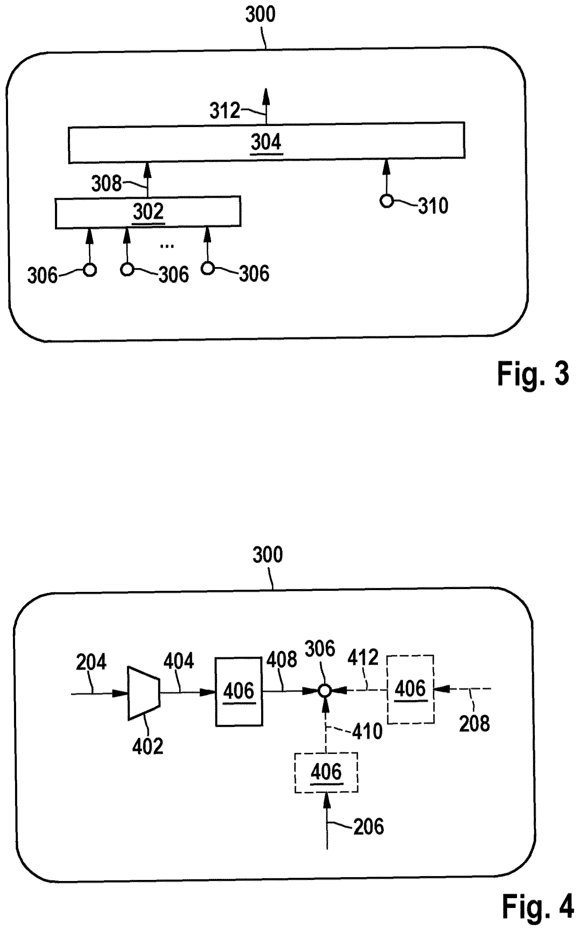

In Figur 3 ist ein erster Teil eines Modells 300 zur Verarbeitung der Sensordaten schematisch dargestellt.

Das Modell 300 umfasst einen Kodierer 302 und einen Dekodierer 304.

Beispielsweise sind der Kodierer 302 und der Dekodierer 304 wie für den Kodierer und den Dekodierer des in "In Attention Is All You Need" arXiv:1706.03762 beschriebenen Transformers ausgebildet.

Der Kodierer 302 ist ausgebildet, eine Eingangsgröße 306 oder mehrere Eingangsgrößen 306 des Kodierers 302 auf eine Ausgangsgröße des Kodierers 302 oder auf mehrere Ausgangsgrößen des Kodierers 302 abzubilden. Beispielsweise ist der Kodierer 302 ausgebildet, die Eingangsgrößen 306 auf so viele Ausgangsgrößen des Kodierers 302 wie Eingangsgrößen 306 abzubilden. Eine erste Eingangsgröße 308 des Dekodierers umfasst die Ausgangsgröße oder die Ausgangsgrößen des Kodierers 302.

Der Dekodierer 304 ist ausgebildet, die erste Eingangsgröße 308 und eine zweite Eingangsgröße 310 oder mehrere zweite Eingangsgrößen 310 des Dekodierers auf eine Vorhersage für Sensordaten 312 abzubilden. Das bedeutet, mit dem Dekodierer 304 sind Sensordaten 312 vorhersagbar.

Mit dem Dekodierer 304 wird die Vorhersage für Sensordaten 312 z.B. für ein einzelnes Segment oder mehrere Segmente bestimmt. Beispielsweise sind so viele zweite Eingangsgrößen 310 vorgesehen, wie Segmente in den Sensordaten unbekannt und daher vorherzusagen sind. Die Vorhersage für die Sensordaten 312 umfasst beispielsweise genauso viele Segmente, wie zweite Eingangsgrößen 310 vorgesehen sind.

Der Dekodierer 304 ist z.B. ausgebildet, eine Menge von Segmenten vorhersagen, die über eine beliebige Kombination von Zeitpunkten und physikalischen Größen spezifiziert sind.

Die multivariate Zeitreihe $x_{1:T;1:D}$ kann ein Segment umfassen oder in mehrere Segmente $L_{seg}$ zerteilt sein.

Die multivariate Zeitreihe $x_{1:T;1:D}$ wird beispielsweise je Dimension d, d.h. je Kanal 202, in $T/L_{seg}$ Segmente $L_{seg}$ zerlegt. Diese sind mit $x_{i,d}^{(s)}$ notiert, wobei i das i-te Segment und d den d-ten Kanal 202 bezeichnet.

In Figur 4 ist ein zweiter Teil des Modells 300 schematisch dargestellt.

Der zweite Teil des Modells 300 umfasst einen Text-Kodierer 402. Der Text-Kodierer 402 ist ausgebildet, abhängig vom Text 204 eine Textkodierung 404 zu bestimmen.

Der zweite Teil des Modells 300 umfasst ein neuronales Netzwerk 406. Das neuronale Netzwerk 406 ist ausgebildet, abhängig von der ersten Textkodierung 404 eine erste Kanalpositionskodierung 408 zu bestimmen.

Der zweite Teil des Modells 300 ist ausgebildet, die Eingangsgröße 306 des Kodierers 302 abhängig von einem Segment 206 aus einem Kanal 202 der Sensordaten 200 und abhängig von der Kanalpositionskodierung 408 des Kanals 202 aus dem das Segmente 206 stammt, zu bestimmen.

Optional umfasst der zweite Teil des Modells 300 ein neuronales Netzwerk 406, das ausgebildet ist, das Segment 206 auf eine Kodierung 410 des Segments 206 abzubilden. Der zweite Teil des Modells 300 ist z.B. ausgebildet, die Eingangsgröße 306 des Kodierers 302 abhängig von der Kodierung 410 des Segments 206 und abhängig von der Kanalpositionskodierung 408 des Kanals 202 aus dem das Segmente 206 stammt, zu bestimmen.

Optional umfasst der zweite Teil des Modells 300 ein neuronales Netzwerk 406, das ausgebildet ist, den Zeitraum 208 des Segments 206 für das die Kanalpositionskodierung 408 bestimmt wird, auf eine Zeitpositionskodierung 412 abzubilden.

Es kann vorgesehen sein, dass der zweite Teil des Modells 300 ausgebildet ist, die Eingangsgröße 306 des Kodierers 302 abhängig von der Kodierung 410 des Segments 206 und abhängig von der Kanalpositionskodierung 408 des Kanals 202 aus dem das Segmente 206 stammt, und abhängig von der Zeitpositionskodierung 412 des Zeitraums 208 des Segments 206, für das die Kanalpositionskodierung 408 bestimmt wird, zu bestimmen.

Es kann vorgesehen sein, dass der zweite Teil des Modells 300 ausgebildet ist, die Eingangsgröße 306 des Kodierers 302 abhängig vom Segment 206 und abhängig von der Kanalpositionskodierung 408 des Kanals 202 aus dem das Segmente 206 stammt, und abhängig von der Zeitpositionskodierung 412 des Zeitraums 208 des Segments 206, für das die Kanalpositionskodierung 408 bestimmt wird, zu bestimmen.

Die Eingangsgröße 306 des Kodierers 302 wird z.B. unabhängig von der Zeitpositionskodierung 412 für die Segmente $x_{i,d}^{(s)}$ wie folgt bestimmt:

$$h_{i,d} = E \cdot x_{i,d}^{(s)} + f(e_{s_d})$$

wobei $h_{i,d}$ die Eingangsgröße 306 in einem Einbettungsraum, d.h. einem embedding space, des Kodierers 302, E eine lernbare Matrix mit einer zur Länge der Segmente $x_{i,d}^{(s)}$ und der Dimension des Einbettungsraum passen-

den Größe, $E \cdot x_{i,d}^{(s)}$ eine Projektion des Werteverlaufs der Werte der univariaten Zeitreihe im Segment $x_{i,d}^{(s)}$ in den Einbettungsraum, $e_{s_d}$ die Textkodierung 404, $f$ ein neuronales Netzwerk zur Abbildung der Textkodierung 404 in den Einbettungsraum repräsentiert.

Die Eingangsgröße 306 des Kodierers 302 wird z.B. für die Segmente $x_{i,d}^{(s)}$ wie folgt bestimmt:

$$h_{i,d} = E \cdot x_{i,d}^{(s)} + f(t, e_{s_d})$$

wobei $h_{i,d}$ die Eingangsgröße 306 in den Einbettungsraum des Kodierers 302, $E$ die lernbare Matrix, $E \cdot x_{i,d}^{(s)}$ die Projektion des Werteverlaufs der Werte der univariaten Zeitreihe im Segment $x_{i,d}^{(s)}$ in den Einbettungsraum, $t$ die Zeitpositionskodierung 412, $e_{s_d}$ die Textkodierung 404, $f$ ein neuronales Netzwerk zur Abbildung der Zeitpositionskodierung 412 und der Textkodierung 404 in den Einbettungsraum repräsentiert.

Die Eingangsgröße 306 des Kodierers 302 wird z.B. wie folgt bestimmt:

$$h_{i,d} = T(x_{i,d}^{(s)}) + f(t_{start}, t_{end}, e_{s_d})$$

wobei $h_{i,d}$ die Eingangsgröße 306 im Einbettungsraum des Kodierers 302, $T(\cdot)$ ein Operator, $e_{s_d}$ die Textkodierung 404, $f$ ein neuronales Netzwerk zur Abbildung eines Anfangszeitpunkts $t_{start}$ und eines Endzeitpunkts $t_{end}$ des Segments $x_{i,d}^{(s)}$ und der Textkodierung 404 in den Einbettungsraum repräsentiert.

Der Operator $T(\cdot)$ ist ausgebildet, mit unterschiedlichen Längen der Segmente $x_{i,d}^{(s)}$ effizient umzugehen und auf einen Vektor im Einbettungsraum des Kodierers 302 abbildet. Beispielsweise ist der Operator $T(\cdot)$ als ein Transformer implementiert, welcher zunächst den Werteverlauf innerhalb eines Segments auf eine Sequenz von Einbettungen abbildet und diese Einbettungen dann über eine mittelwertsbildende Aggregation, d.h. mean-aggregation, zu einem Vektor abbildet. Beispielsweise ist der Operator ein Rekursives Neuronalen Netzwerk (RNN), welches den Werteverlauf innerhalb eines Segments auf einen letzten hidden state abbildet. Beispielsweise ist der Operator ein Mehrlagiges Perzeptron (MLP) das ein Auffüllen mit 0-en auf eine gegebene Länge, d.h. Zero-Padding, umfasst.

Die Eingangsgröße 306 des Kodierers 302 wird z.B. wie folgt bestimmt:

$$h_{i,d} = r(e_{s_d}, t_{start}, t_{end}, x_{i,d}^{(s)})$$

wobei $r(\cdot)$ eine nichtlineare Kombination der durch $e_{s_d}$ repräsentierten Textkodierung 404, eines Anfangszeitpunkts $t_{start}$ und eines Endzeitpunkts $t_{end}$ des jeweiligen Segments $x_{i,d}^{(s)}$, und des $x_{i,d}^{(s)}$ repräsentiert. Die nichtlineare Kombination $r(\cdot)$ ist z.B. als ein neuronales Netzwerk, insbesondere ein Transformer, implementiert.

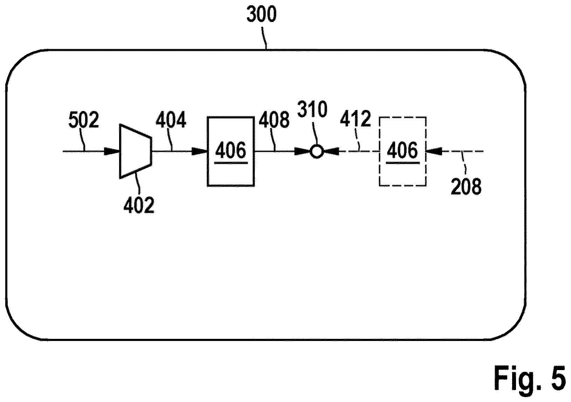

In Figur 5 ist ein dritter Teil des Modells 300 schematisch dargestellt.

Der dritte Teil des Modells 300 umfasst einen Text-Kodierer 402. Der Text-Kodierer 402 ist ausgebildet, einen vorgegebenen Text 502 auf eine Textkodierung 404 abzubilden. Der vorgegebene Text 502 charakterisiert die vorherzusagenden Sensordaten 312 und/oder eine Dimension der vorherzusagenden Sensordaten 312. Der dritte Teil des Modells 300 umfasst ein neuronales Netzwerk 406, das ausgebildet ist, die Textkodierung 404 auf eine Kanalpositionskodierung 408 abzubilden. Der dritte Teil des Modells 300 ist ausgebildet, die zweite Eingangsgröße 310 des Dekodierers 304 abhängig von der Kanalpositionskodierung 408 zu bestimmen.

Optional umfasst der dritte Teil des Modells 300 ein neuronales Netzwerk 406, das ausgebildet ist, den Zeitraum 208 eines Segments 206 für das die Sensordaten 312 mit dem Dekodierer 304 vorherzusagen sind, auf eine Zeitpositionskodierung 412 abzubilden. Der dritte Teil des Modells ist z.B. ausgebildet, die zweite Eingangsgröße 310 des Dekodierers 304 abhängig von der Kanalpositionskodierung 408 und der Zeitpositionskodierung 412 zu bestimmen.

Die zweite Eingangsgröße 310 wird z.B. unabhängig von der Zeitpositionskodierung 412 wie folgt bestimmt:

$$v_{i,d} = f(e_{s_d})$$

wobei $v_{i,d}$ die zweite Eingangsgröße 310 in einem Einbettungsraum, d.h. einem embedding space, des Dekodierers 304, $e_{s_d}$ die Textkodierung 404, $f$ ein neuronales Netzwerk zur Abbildung der Textkodierung 404 in den Einbettungsraum repräsentiert.

Die zweite Eingangsgröße 310 des Dekodierers 304 wird z.B. abhängig von der Zeitpositionskodierung 412 wie folgt bestimmt:

$$v_{i,d} = f(t, e_{s_d})$$

wobei $v_{i,d}$ die zweite Eingangsgröße 310 im Einbettungsraum des Dekodierers 304, $t$ die Zeitpositionskodierung 412, $e_{s_d}$ die Textkodierung 404, $f$ ein neuronales Netzwerk zur Abbildung der Zeitpositionskodierung 412 und der Textkodierung 404 in den Einbettungsraum repräsentiert.

Die zweite Eingangsgröße 310 des Dekodierers 304 wird z.B. wie folgt bestimmt:

$$v_{i,d} = f(t_{start}, t_{end}, e_{s_d})$$

wobei $v_{i,d}$ die zweite Eingangsgröße 310 im Einbettungsraum des Dekodierers 304, $e_{s_d}$ die Textkodierung 404, $f$ ein neuronales Netzwerk zur Abbildung eines Anfangs- zeitpunkts $t_{start}$ und eines Endzeitpunkts $t_{end}$ des Seg- ments $x_{i,d}^{(s)}$ und der Textkodierung 404 in den Einbettungsraum repräsentiert.

Die zweite Eingangsgröße 310 des Dekodierers 304 wird z.B. wie folgt bestimmt:

$$v_{i,d} = r(e_{s_d}, t_{start}, t_{end}, x_{i,d}^{(s)})$$

wobei $r(\cdot)$ eine nichtlinare Kombination der durch $e_{s_d}$ repräsentierten Textkodierung 404, eines Anfangszeit- punkts $t_{start}$ und eines Endzeitpunkts $t_{end}$ des jeweiligen Segments $x_{i,d}^{(s)}$, und des $x_{i,d}^{(s)}$ repräsentiert. Die nichtlineare Kombination $r(\cdot)$ ist z.B. als ein neuronales Netzwerk, insbesondere ein Transformer, implementiert.

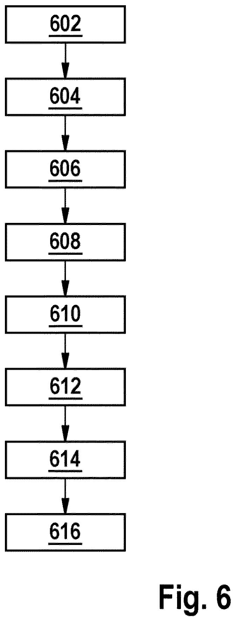

In Figur 6 ist ein Flussdiagramm mit Schritten eines ersten Beispiels für ein Verfahren zur Verarbeitung von Sensordaten dargestellt. Das erste Beispiel sieht keine Zeitpositionskodierung vor. Beispielsweise werden mit dem Verfahren gemäß dem ersten Beispiel für Sensordaten 200 aus einem Zeitraum die in den Kanälen aus den Sensordaten 200 enthaltenen Sensordaten aus dem gesamten Zeitraum verarbeitet.

Das Verfahren wird für zwei Kanäle 202, den ersten Kanal 202 und den zweiten Kanal 202, beschrieben. Das Verfahren wird am Beispiel einer Vorhersage von Sensordaten aus dem zweiten Kanal 202 abhängig von den Sensordaten aus dem ersten Kanal 202 beschrieben.

Der Kodierer 302 umfasst für das Beispiel einen Eingang 306.

Das Verfahren ist für mehr als zwei Kanäle 202 anwendbar. Je Kanal 202, der im Verfahren berücksichtigt wird, ist ein entsprechender Eingang 306 des Kodierers 302 vorgesehen. Das Verfahren wird auf die berücksichtigten Kanäle 202 wie für den ersten Kanal 202 beschrieben ausgeführt.

Das Verfahren ist für eine Vorhersage von Sensordaten aus dem zweiten Kanal 202 unter Berücksichtigung der Sensordaten aus dem zweiten Kanal 202 anwendbar. Das Verfahren ist für eine Vorhersage von Sensordaten, die nicht in einem der Kanäle enthalten sind, anwendbar.

Das Verfahren gemäß dem ersten Beispiel umfasst einen Schritt 602.

Im Schritt 602 werden die Sensordaten 200 im ersten Kanal 202 und im zweiten Kanal 202 bereitgestellt. Die Sensordaten 200 im zweiten Kanal 202 sind im Beispiel eine Referenz für die vorherzusagenden Sensordaten 312.

Dem ersten Kanal 202 ist der erste Text 204 zugeordnet. Der erste Text 204 charakterisiert die Sensordaten 200 und/oder die Dimension der Sensordaten 200 im ersten Kanal 202.

Dem zweiten Kanal 202 ist der zweite Text 204 zugeordnet. Der zweite Text 204 charakterisiert die Sensordaten 200 und/oder die Dimension der Sensordaten 200 im zweiten Kanal 202.

Das Verfahren gemäß dem ersten Beispiel umfasst einen Schritt 604.

Im Schritt 604 wird abhängig vom ersten Text 204, insbesondere mit dem Text-Kodierer 402, die erste Textkodierung 404 bestimmt.

Im Schritt 604 wird abhängig vom vorgegebenen Text 502, insbesondere mit dem Text-Kodierer 402, eine zweite Textkodierung 404 bestimmt.

Der vorgegebene Text 502 charakterisiert die vorherzusagenden Sensordaten 312 und/oder die Dimension der vorherzusagenden Sensordaten 312.

Beispielsweise wird der vorgegebene Text 502 in einer Nutzereingabe erfasst.

Im Beispiel charakterisiert der vorgegebene Text 502 die Sensordaten 200 im zweiten Kanal 202.

Der vorgegebene Text 502 ist im Beispiel der Text 204, der dem zweiten Kanal 202 der Sensordaten 200 zugeordnet ist. Der vorgegebene Text 502 kann ein anderer Text sein, der die Sensordaten oder die Dimension der Sensordaten aus dem zweiten Kanal 202 charakterisiert.

Zur Vorhersage anderer Sensordaten, als der Sensordaten die in einem der Kanäle 202 der Sensordaten 200 enthalten sind, kann der vorgegebene Text 502 ein Text sein, der die anderen Sensordaten oder die Dimension der Sensordaten charakterisiert.

Das Verfahren gemäß dem ersten Beispiel umfasst einen Schritt 606.

Im Schritt 606 wird abhängig von der ersten Textkodierung 404, insbesondere mit dem neuronalen Netzwerk 406, eine erste Kanalpositionskodierung 408 bestimmt.

Im Schritt 606 wird abhängig von der zweiten Textkodierung 404, insbesondere mit dem neuronalen Netzwerk 406, eine zweite Kanalpositionskodierung 408 bestimmt.

Das Verfahren gemäß dem ersten Beispiel umfasst einen Schritt 608.

Im Schritt 608 wird wenigstens eine Eingangsgröße 306 des Kodierers 302 bestimmt.

Beispielsweise wird je Kanal 202, der berücksichtigt wird, eine Eingangsgröße 306 des Kodierers 302 bestimmt.

Im Beispiel ist vorgesehen, dass der erste Kanal 202 berücksichtigt wird.

Abhängig von den Sensordaten 200 aus dem ersten Kanal 202 und abhängig von der ersten Kanalpositionskodierung 408 wird eine Eingangsgröße 306 des Kodierers 302 bestimmt. Optional ist vorgesehen, das die Eingangsgrößen 306 für den ersten Kodierer 302 abhängig von der Kodierung der Sensordaten aus dem ersten Kanal 202 und abhängig von der ersten Kanalpositionskodierung 408 bestimmt wird. Die Sensordaten aus dem ersten Kanal 202 werden z.B. mit dem neuronalen Netzwerk 406 auf die Kodierung der Sensordaten aus dem ersten Kanal 202 abgebildet.

Das Verfahren gemäß dem ersten Beispiel umfasst einen Schritt 610.

Im Schritt 610 wird mit dem Kodierer 302 abhängig von den Eingangsgrößen 306 des Kodierers 302 die erste Eingangsgröße 308 des Dekodierers 304 bestimmt.

Falls mehrere Kanäle 202 berücksichtigt werden, wird die erste Eingangsgröße 308 des Dekodierers 304 mit dem Kodierer 302 abhängig von den für die mehreren Kanäle 202 bestimmten Eingangsgrößen 306 des Kodierers 302 bestimmt.

Das Verfahren gemäß dem ersten Beispiel umfasst einen Schritt 612.

Im Schritt 612 wird die zweite Eingangsgröße 310 des Dekodierers 304 bestimmt.

Die zweite Eingangsgröße 310 wird abhängig von der zweiten Kanalpositionskodierung 408 bestimmt.

Das Verfahren gemäß dem ersten Beispiel umfasst einen Schritt 614.

Im Schritt 614 werden mit dem Dekodierer 304 abhängig von der ersten Eingangsgröße 308 und der zweiten Eingangsgröße 310 die Sensordaten 312, insbesondere die Zeitreihe von Sensordaten 312 vorhergesagt.

Im Beispiel werden die Sensordaten 312 für den zweiten Kanal 502, vorhergesagt.

Das Verfahren gemäß dem ersten Beispiel umfasst optional einen Schritt 616.

Im Schritt 616 kann ein Training des Kodierers 302 und/oder des Dekodierers 304 vorgesehen sein.

Beispielsweise wird der Kodierer 302 und/oder der Dekodierer 304 abhängig von einem Unterschied zwischen der Referenz und den vorhergesagten Sensordaten 312 trainiert.

Im Schritt 616 kann eine Anomalieerkennnung vorgesehen sein.

Beispielsweise wird die Anomalie abhängig von einem Unterschied zwischen der Referenz und den vorhergesagten Sensordaten 312 erkannt. Die Anomalie wird z.B. erkannt, wenn der Unterschied größer als ein Schwellwert ist. Der Unterschied ist z.B. eine mittlere Abweichung zwischen Werten der Zeitreihe der Referenz und Werten der Zeitreihe der vorhergesagten Sensordaten 312.

Im Schritt 616 kann eine Kalibrierung vorgesehen sein.

Die Kalibrierung wird z.B. abhängig vom Unterschied zwischen der Referenz und den vorhergesagten Sensordaten 312 durchgeführt.

Im Schritt 616 kann eine Ausgabe der vorhergesagten Sensordaten 312 vorgesehen sein. Beispielsweise wird die vorhergesagte Zeitreihe ausgegeben.

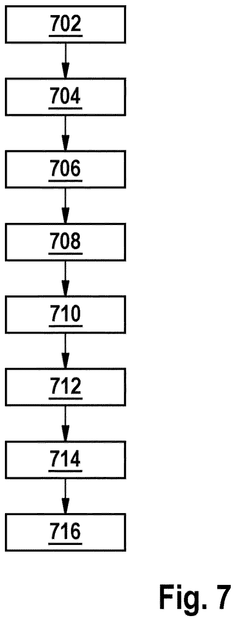

In Figur 7 ist ein Flussdiagramm mit Schritten eines zweiten Beispiels für das Verfahren zur Verarbeitung von Sensordaten dargestellt. Das zweite Beispiel sieht eine Zeitpositionskodierung vor.

Das Verfahren gemäß dem zweiten Beispiel umfasst einen Schritt 702.

Im Schritt 702 werden die die Sensordaten 200 im ersten Kanal 202 und im zweiten Kanal 202 in den Segmenten 206 bereitgestellt werden.

Im Schritt 702 wird eine erste Zeitangabe bereitgestellt, die einen Zeitraum 208 der Erfassung der Sensordaten 200 eines für die Vorhersage der Sensordaten 312 zu berücksichtigenden Segments 206 des ersten Kanals charakterisiert.

Im Beispiel wird die erste Zeitangabe bereitgestellt, die das erste Segment des ersten Kanals 202 charakterisiert.

Zudem wird im Schritt 702 eine zweite Zeitangabe bereitgestellt, die charakterisiert, in welchem Zeitraum 208 die Sensordaten 312 vorherzusagen sind.

Im Beispiel wird die zweite Zeitangabe bereitgestellt, die den Zeitraum des zweiten Segments 206 des zweiten Kanals 202 charakterisiert.

Die erste Zeitangabe und/oder die zweite Zeitangabe werden z.B. in einer Nutzereingabe erfasst.

Die Zeitangabe charakterisiert z.B. einen Start und ein Ende des Zeitraums 208. Die Zeitangabe umfasst z.B. einen Zeitpunkt oder Zeitindex, der dem Zeitraum 208 zugeordnet ist.

Das Verfahren gemäß dem zweiten Beispiel umfasst einen Schritt 704.

Im Schritt 704 wird abhängig vom ersten Text 204, insbesondere mit dem Text-Kodierer 402, die erste Textkodierung 404 bestimmt.

Im Schritt 704 wird abhängig vom vorgegebenen Text 502, insbesondere mit dem Text-Kodierer 402, eine zweite Textkodierung 404 bestimmt.

Der vorgegebene Text 502 charakterisiert die vorherzusagenden Sensordaten 312 und/oder die Dimension der vorherzusagenden Sensordaten 312.

Beispielsweise wird der vorgegebene Text 502 in einer Nutzereingabe erfasst.

Im Beispiel charakterisiert der vorgegebene Text 502 die Sensordaten 200 im zweiten Kanal 202.

Der vorgegebene Text 502 ist im Beispiel der Text 204, der dem zweiten Kanal 202 der Sensordaten 200 zugeordnet ist. Der vorgegebene Text 502 kann ein anderer Text sein, der die Sensordaten oder die Dimension der Sensordaten aus dem zweiten Kanal 202 charakterisiert.

Zur Vorhersage andere Sensordaten, als der Sensordaten die in einem der Kanäle 202 der Sensordaten 200 enthalten sind, kann der vorgegebene Text 502 ein Text sein, der die anderen Sensordaten oder die Dimension der Sensordaten charakterisiert. Dies ist beispielsweise dann möglich, wenn das Modell zuvor auf Trainingsdaten, die die den anderen Sensordaten umfassen, zur Vorhersage dieser anderen Sensordaten trainiert wurde.

Das Verfahren gemäß dem zweiten Beispiel umfasst einen Schritt 706.

Im Schritt 706 wird abhängig von der ersten Textkodierung 404, insbesondere mit dem neuronalen Netzwerk 406, eine erste Kanalpositionskodierung 408 bestimmt.

Im Schritt 706 wird abhängig von der zweiten Textkodierung 404, insbesondere mit dem neuronalen Netzwerk 406, eine zweite Kanalpositionskodierung 408 bestimmt.

Im Schritt 706 wird abhängig von der ersten Zeitangabe, insbesondere mit dem neuronalen Netzwerk 406, eine erste Zeitpositionskodierung 412 bestimmt.

Im Schritt 706 wird abhängig von der zweiten Zeitangabe, insbesondere mit demselben neuronalen Netzwerk 406 mit dem die erste Zeitpositionskodierung 412 bestimmt wird, oder mit einem anderen neuronalen Netzwerk 406, eine zweite Zeitpositionskodierung 412 bestimmt.

Das Verfahren gemäß dem zweiten Beispiel umfasst einen Schritt 708.

Im Schritt 708 wird wenigstens eine Eingangsgröße 306 des Kodierers 302 bestimmt.

Beispielsweise wird je Kanal 202, der berücksichtigt wird, eine Eingangsgröße 306 des Kodierers 302 bestimmt.

Im Beispiel ist vorgesehen, dass der erste Kanal 202 berücksichtigt wird.

Abhängig von den Sensordaten 200 aus dem ersten Kanal 202 und abhängig von der ersten Kanalpositionskodierung 408 und abhängig von der ersten Zeitpositionskodierung 412 wird eine Eingangsgröße 306 des Kodierers 302 bestimmt. Optional ist vorgesehen, dass die Eingangsgrößen 306 für den ersten Kodierer 302 abhängig von der Kodierung der Sensordaten aus dem ersten Kanal 202 und abhängig von der ersten Kanalpositionskodierung 408 und abhängig von der ersten Zeitpositionskodierung 412 bestimmt wird. Die Sensordaten aus dem ersten Kanal 202 werden z.B. mit dem neuronalen Netzwerk 406 auf die Kodierung der Sensordaten aus dem ersten Kanal 202 abgebildet.

Das Verfahren gemäß dem zweiten Beispiel umfasst einen Schritt 710.

Im Schritt 710 wird mit dem Kodierer 302 abhängig von der Eingangsgrößen 306 des Kodierers 302 die erste Eingangsgröße 308 des Dekodierers 304 bestimmt.

Falls mehrere Kanäle 202 berücksichtigt werden, wird die erste Eingangsgröße 308 des Dekodierers 304 mit dem Kodierer 302 abhängig von den für die mehreren Kanäle 202 bestimmten Eingangsgrößen 306 des Kodierers 302 bestimmt.

Das Verfahren gemäß dem zweiten Beispiel umfasst einen Schritt 712.

Im Schritt 712 wird die zweite Eingangsgröße 310 des Dekodierers 304 bestimmt.

Die zweite Eingangsgröße 310 wird abhängig von der zweiten Kanalpositionskodierung 408 und abhängig von der zweiten Zeitpositionskodierung 412 bestimmt.

Das Verfahren gemäß dem zweiten Beispiel umfasst einen Schritt 714.

Im Schritt 714 werden mit dem Dekodierer 304 die Sensordaten 312 aus dem Segment 206 der vorhergesagten Sensordaten 312 bestimmt, das der zweiten Zeitangabe zugeordnet ist.

Es kann vorgesehen sein, dass ein einzelner Kanal 202 berücksichtigt wird. Beispielsweise werden aus bekannten Sensordaten 200 aus dem einzelnen Kanal 202 Sensordaten 200 aus dem einzelnen Kanal vorhergesagt. Beispielsweise werden aus vergangenen Sensordaten 200 aus dem einzelnen Kanal 202 zukünftige Sensordaten 200 für den einzelnen Kanal 202 vorhergesagt. Beispielsweise werden zur Rekonstruktion von Sensordaten 200 des einzelnen Kanals 202 aus bekannten Sensordaten 200 aus dem einzelnen Kanal 202 unbekannte Sensordaten 200 für den einzelnen Kanal 202 vorhergesagt. Die Sensordaten 200 für den einzelnen Kanal 202 können insgesamt oder für bestimmte Segmente der Sensordaten 200 aus dem einzelnen Kanal 202 vorhergesagt werden. Die Sensordaten 200 für den einzelnen Kanal 202 können abhängig von den Sensordaten 200 aus dem einzelnen Kanal 202 insgesamt oder abhängig von einem oder mehreren Segmenten der Sensordaten 200 aus dem einzelnen Kanal 202 vorhergesagt werden.

Das bedeutet, statt der Sensordaten 200 aus dem ersten Kanal 202 und dem zweiten Kanal 202 werden die Sensordaten 200 aus dem einzelnen Kanal 202 bereitgestellt.

Falls der einzelne Kanal 202 berücksichtigt wird, wird die erste Eingangsgröße 308 des Dekodierers 304 mit dem Kodierer 302 abhängig von der für den einzelnen Kanal bestimmten Eingangsgröße 306 des Kodierers 302 bestimmt.

Es kann vorgesehen sein, dass die Sensordaten 200 zu einzelnen insbesondere verschiedenen Zeitpunkten oder für verschiedene Kanäle 202 gleichzeitig vorhergesagt werden.

Beispielsweise werden zukünftige Sensordaten 200, d.h. noch nicht gemessenen Sensordaten 200, aus mehreren Kanälen 202, insbesondere aus dem ersten Kanal 202 und dem zweiten Kanal 202 gleichzeitig vorhergesagt.

**Patentansprüche**

1. Computerimplementiertes Verfahren zur Verarbeitung von Sensordaten (200), insbesondere Zeitreihen von Sensordaten (200), **dadurch gekennzeichnet, dass** die Sensordaten (200) in einem ersten Kanal (202) bereitgestellt werden (602, 702), wobei der erste Kanal (202) einen ersten Teil der Sensordaten (200), insbesondere eine erste Zeitreihe von Sensordaten (200), umfasst, wobei dem ersten Kanal (202) ein erster Text (204) zugeordnet ist, der die Sensordaten (200) und/oder eine Dimension der Sensordaten (200) im ersten Kanal (202) charakterisiert, wobei abhängig vom ersten Text (204), insbesondere mit einem Text-Kodierer (402), eine erste Textkodierung (404) bestimmt wird (604, 704), wobei abhängig von der ersten Textkodierung (404), insbesondere mit einem neuronalen Netzwerk (406), eine erste Kanalpositionskodierung (408) bestimmt wird (606, 706), wobei abhängig von einem vorgegebenen Text (502), insbesondere mit dem oder einem Text-Kodierer (402), eine zweite Textkodierung (404) bestimmt wird (604, 704), wobei der vorgegebene Text (502) vorherzusagende Sensordaten (312) und/oder eine Dimension von vorherzusagenden Sensordaten (312) charakterisiert, wobei abhängig von der zweiten Textkodierung (404), insbesondere mit dem oder einem neuronalen Netzwerk (406), eine zweite Kanalpositionskodierung (408) bestimmt wird (606, 706), wobei eine erste Eingangsgröße (306) eines Kodierers (302) abhängig von Sensordaten (200) aus dem ersten Kanal (202) und abhängig von der ersten Kanalpositionskodierung (408) bestimmt wird (608, 708), wobei mit dem Kodierer (302) abhängig von der ersten Eingangsgröße (306) des Kodierers (302) eine erste Eingangsgröße (308) eines Dekodierers (304) bestimmt wird (610, 710), wobei eine zweite Eingangsgröße (310) des Dekodierers (304) abhängig von der zweiten Kanalpositionskodierung (408) bestimmt wird (612, 712), und wobei mit dem Dekodierer (304) abhängig von der ersten Eingangsgröße (308) des Dekodierers (304) und der zweiten Eingangsgröße (310) des Dekodierers (304) Sensordaten (312) werden, insbesondere eine Zeitreihe von Sensordaten (312), vorhergesagt wird (614, 714).

2. Computerimplementiertes Verfahren nach Anspruch 1, **dadurch gekennzeichnet, dass** die Sensordaten (200) im ersten Kanal (202) und in einem zweiten Kanal (202) bereitgestellt werden (602, 702), wobei der zweite Kanal (202) einen zweiten Teil der Sensordaten (200), insbesondere eine zweite Zeitreihe von Sensordaten (200), umfasst, wobei dem zweiten Kanal (202) ein zweiter Text (204) zugeordnet ist, der die Sensordaten (200) und/oder eine Dimension der Sensordaten (200) im zweiten Kanal (202) charakterisiert, wobei abhängig vom zweiten Text (204), insbesondere mit einem Text-Kodierer (402), eine dritte Textkodierung (404) bestimmt wird (604, 704), wobei abhängig von der dritten Textkodierung (404), insbesondere mit einem neuronalen Netzwerk (406), eine dritte Kanalpositionskodierung (408) bestimmt wird (606, 706), wobei eine zweite Eingangsgröße (306) des Kodierers (302) abhängig von Sensordaten (200) aus dem zweiten Kanal (202) und abhängig von der dritten Kanalpositionskodierung (408) bestimmt wird (608, 708), wobei mit dem Kodierer (302) abhängig von den Eingangsgrößen (306) des Kodierers (302) die erste Eingangsgröße (308) des Dekodierers (304) bestimmt wird (610, 710).

3. Computerimplementiertes Verfahren nach Anspruch 2, **dadurch gekennzeichnet, dass** abhängig von Sensordaten (200) aus dem zweiten Kanal (202), insbesondere mit einem neuronalen Netzwerk (406), eine Kodierung (410) von Sensordaten (200) aus dem zweiten Kanal (202) bestimmt wird, wobei die zweite Eingangsgröße (306) des Kodierers (302) abhängig von der Kodierung (410) der Sensordaten (200) aus dem zweiten Kanal (202) und abhängig von der dritten Kanalpositionskodierung (408) bestimmt wird (608).

4. Computerimplementiertes Verfahren nach einem der Ansprüche 1 bis 3, **dadurch gekennzeichnet, dass** abhängig von Sensordaten (200) aus dem ersten Kanal (202), insbesondere mit einem neuronalen Netzwerk (406), eine Kodierung (410) von Sensordaten (200) aus dem ersten Kanal (202) bestimmt wird, wobei die erste Eingangsgröße (306) des Kodierers (302) abhängig von der Kodierung (410) der Sensordaten (200) aus dem ersten Kanal (202) und abhängig von der ersten Kanalpositionskodierung (408) bestimmt wird (608).

5. Computerimplementiertes Verfahren nach Anspruch 1, **dadurch gekennzeichnet, dass** ein Segment (206) der Sensordaten (200) des ersten Kanals (202) zur Bestimmung der ersten Eingangsgröße (306) des Kodierers (302) bereitgestellt wird (702), wobei dem Segment (206) eine erster Zeitangabe zugeordnet ist, die einen Zeitraum (208) der Erfassung der Sensordaten (200) des Segments (206) des ersten Kanals (502) charakterisiert, wobei abhängig von der ersten Zeitangabe, insbesondere mit einem neuronalen Netzwerk (406), eine erste Zeitpositionskodierung (412) bestimmt wird (706), und wobei die erste Eingangsgröße (306) des Kodierers (302) abhängig von den Sensordaten (200) aus dem Segment (206) der Sensordaten (200) des ersten Kanals (202) und abhängig von der ersten Kanalpositionskodierung (408) und abhängig von der ersten Zeitpositionskodierung (412) bestimmt wird (708).

6. Verfahren nach Anspruch 5, **dadurch gekennzeichnet, dass** abhängig von Sensordaten (200) aus dem ersten Kanal (202), insbesondere mit einem neuronalen Netzwerk (406), eine Kodierung (410) von Sensordaten (200) aus dem ersten Kanal (202) bestimmt wird, wobei die erste Eingangsgröße (306) des Kodierers (302) abhängig von der Kodierung (410) der Sensordaten (200) aus dem Segment (206) der Sensordaten (200) des ersten Kanals (202) und der ersten Kanalpositionskodierung (408) und der ersten Zeitpositionskodierung (412) bestimmt wird (708).

7. Verfahren nach Anspruch 5 oder 6, **dadurch gekennzeichnet, dass** mit dem Dekodierer (304) Sensordaten (200) aus einem Segment (206) der vorhergesagten Sensordaten (200) bestimmt werden (714), wobei dem Segment (206) der vorhergesagten Sensordaten (200) eine zweite Zeitangabe zugeordnet ist, die einen Zeitraum (208) der Sensordaten (200) im Segment (206) der vorhergesagten Sensordaten (200) charakterisiert, wobei abhängig von der zweiten Zeitangabe (208), insbesondere mit demselben neuronalen Netzwerk (406) mit dem die erste Zeitpositionskodierung (412) bestimmt wird, oder mit einem neuronalen Netzwerk (406), eine zweite Zeitpositionskodierung (412) bestimmt wird (706), und wobei die zweite Eingangsgröße (310) des Dekodierers (304), abhängig von der zweiten Kanalpositionskodierung (408) und abhängig von der zweiten Zeitpositionskodierung (412) bestimmt wird (708).

8. Verfahren nach Anspruch 7, **dadurch gekennzeichnet, dass** eine die zweite Zeitangabe umfassende Nutzereingabe erfasst wird (702).

9. Verfahren nach einem der Ansprüche 5 bis 8, **dadurch gekennzeichnet, dass** die Zeitangabe einen Start und ein Ende des Zeitraums (208) charakterisiert, oder dass die Zeitangabe einen Zeitpunkt oder Zeitindex umfasst, der dem Zeitraum (208) zugeordnet ist.

10. Verfahren nach einem der vorherigen Ansprüche, **dadurch gekennzeichnet, dass** eine Referenz für die vorhergesagten Sensordaten (200) bereitgestellt wird (602, 702), wobei der Kodierer (302) und/oder der Dekodierer (304) abhängig von einem Unterschied zwischen der Referenz und den vorhergesagten Sensordaten (312) trainiert werden (616, 716) und/oder wobei abhängig von einem Unterschied zwischen der Referenz und den vorhergesagten Sensordaten (312) eine Anomalie erkannt oder eine Kalibrierung durchgeführt wird.

11. Verfahren nach einem der vorherigen Ansprüche, **dadurch gekennzeichnet, dass** eine den vorgegebenen Text (502) umfassende Nutzereingabe erfasst wird (602, 702).

12. Verfahren nach einem der vorherigen Ansprüche, **dadurch gekennzeichnet, dass** die vorhergesagten Sensordaten (312) ausgegeben werden (616, 716), insbesondere die vorhergesagte Zeitreihe ausgegeben wird.

13. Vorrichtung (100) zur Verarbeitung von Sensordaten (200), insbesondere Zeitreihen von Sensordaten (200), **dadurch gekennzeichnet, dass** die Vorrichtung (100) wenigstens einen Prozessor (102) und wenigstens einen Speicher (104) umfasst, wobei der wenigstens eine Prozessor (102) ausgebildet ist, Instruktionen auszuführen, bei deren Ausführung die Vorrichtung (100) das Verfahren nach einem der vorherigen Ansprüche ausführt, wobei der wenigstens eine Speicher (104) die Instruktionen speichert.

14. Computerprogramm, **dadurch gekennzeichnet, dass** das Computerprogramm von einem Computer ausführbare Instruktionen umfasst, bei deren Ausführung durch den Computer der Computer das Verfahren nach einem der Ansprüche 1 bis 12 ausführt.

**Geänderte Patentansprüche gemäss Regel 137(2) EPÜ.**

1. Computerimplementiertes Verfahren zur Verarbeitung von Sensordaten (200), insbesondere Zeitreihen von Sensordaten (200), wobei die Sensordaten (200) in einem ersten Kanal (202) bereitgestellt werden (602, 702), wobei der erste Kanal (202) einen ersten Teil der Sensordaten (200), insbesondere eine erste Zeitreihe von Sensordaten (200), umfasst, **dadurch gekennzeichnet, dass** dem ersten Kanal (202) ein erster Text (204) zugeordnet ist, der die Sensordaten (200) und/oder eine Dimension der Sensordaten (200) im ersten Kanal (202) charakterisiert, wobei abhängig vom ersten Text (204), insbesondere mit einem Text-Kodierer (402), eine erste Textkodierung (404) bestimmt wird (604, 704), wobei abhängig von der ersten Textkodierung (404), insbesondere mit einem neuronalen Netzwerk (406), eine erste Kanalpositionskodierung (408) bestimmt wird (606, 706), wobei abhängig von einem vorgegebenen Text (502), insbesondere mit dem oder einem Text-Kodierer (402), eine zweite Textkodierung (404) bestimmt wird (604, 704), wobei der vorgegebene Text (502) vorherzusagende Sensordaten (312) und/oder eine Dimension von vorherzusagenden Sensordaten (312) charakterisiert, wobei abhängig von der zweiten Textkodierung (404), insbesondere mit dem oder einem neuronalen Netzwerk (406), eine zweite Kanalpositionskodierung (408) bestimmt wird (606, 706), wobei eine erste Eingangsgröße (306) eines Kodierers (302) abhängig von Sensordaten (200) aus dem ersten Kanal (202) und abhängig von der ersten Kanalpositionskodierung (408) bestimmt wird (608, 708), wobei mit dem Kodierer (302) abhängig von der ersten Eingangsgröße (306) des Kodierers (302) eine erste Eingangsgröße (308) eines Dekodierers (304) bestimmt wird (610, 710), wobei eine zweite Eingangsgröße (310) des Dekodierers (304) abhängig von der zweiten Kanalpositionskodierung (408) bestimmt wird (612, 712), und wobei mit dem Dekodierer (304) abhängig von der ersten Eingangsgröße (308) des Dekodierers (304) und der zweiten Eingangsgröße (310) des Dekodierers (304) Sensordaten (312), insbesondere eine Zeitreihe von Sensordaten (312), vorhergesagt werden (614, 714).

2. Computerimplementiertes Verfahren nach Anspruch 1, **dadurch gekennzeichnet, dass** die Sensordaten (200) im ersten Kanal (202) und in einem zweiten Kanal (202) bereitgestellt werden (602, 702), wobei der zweite Kanal (202) einen zweiten Teil der Sensordaten (200), insbesondere eine zweite Zeitreihe von Sensordaten (200), umfasst, wobei dem zweiten Kanal (202) ein zweiter Text (204) zugeordnet ist, der die Sensordaten (200) und/oder eine Dimension der Sensordaten (200) im zweiten Kanal (202) charakterisiert, wobei abhängig vom zweiten Text (204), insbesondere mit einem Text-Kodierer (402), eine dritte Textkodierung (404) bestimmt wird (604, 704), wobei abhängig von der dritten Textkodierung (404), insbesondere mit einem neuronalen Netzwerk (406), eine dritte Kanalpositionskodierung (408) bestimmt wird (606, 706), wobei eine zweite Eingangsgröße (306) des Kodierers (302) abhängig von Sensordaten (200) aus dem zweiten Kanal (202) und abhängig von der dritten Kanalpositionskodierung (408) bestimmt wird (608, 708), wobei mit dem Kodierer (302) abhängig von den Eingangsgrößen (306) des Kodierers (302) die erste Eingangsgröße (308) des Dekodierers (304) bestimmt wird (610, 710).

3. Computerimplementiertes Verfahren nach Anspruch 2, **dadurch gekennzeichnet, dass** abhängig von Sensordaten (200) aus dem zweiten Kanal (202), insbesondere mit einem neuronalen Netzwerk (406), eine Kodierung (410) von Sensordaten (200) aus dem zweiten Kanal (202) bestimmt wird, wobei die zweite Eingangsgröße (306) des Kodierers (302) abhängig von der Kodierung (410) der Sensordaten (200) aus dem zweiten Kanal (202) und abhängig von der dritten Kanalpositionskodierung (408) bestimmt wird (608).

4. Computerimplementiertes Verfahren nach einem der Ansprüche 1 bis 3, **dadurch gekennzeichnet, dass** abhängig von Sensordaten (200) aus dem ersten Kanal (202), insbesondere mit einem neuronalen Netzwerk (406), eine Kodierung (410) von Sensordaten (200) aus dem ersten Kanal (202) bestimmt wird, wobei die erste Eingangsgröße (306) des Kodierers (302) abhängig von der Kodierung (410) der Sensordaten (200) aus dem ersten Kanal (202) und abhängig von der ersten Kanalpositionskodierung (408) bestimmt wird (608).

5. Computerimplementiertes Verfahren nach Anspruch 1, **dadurch gekennzeichnet, dass** ein Segment (206) der Sensordaten (200) des ersten Kanals (202) zur Bestimmung der ersten Eingangsgröße (306) des Kodierers (302) bereitgestellt wird (702), wobei dem Segment (206) eine erster Zeitangabe zugeordnet ist, die einen Zeitraum (208) der Erfassung der Sensordaten (200) des Segments (206) des ersten Kanals (502) charakterisiert, wobei abhängig von der ersten Zeitangabe, insbesondere mit einem neuronalen Netzwerk (406), eine erste Zeitpositionskodierung (412) bestimmt wird (706), und wobei die erste Eingangsgröße (306) des Kodierers (302) abhängig von den Sensordaten (200) aus dem Segment (206) der Sensordaten (200) des ersten Kanals (202) und abhängig von der ersten Kanalpositionskodierung (408) und abhängig von der ersten Zeitpositionskodierung (412) bestimmt wird (708).

6. Verfahren nach Anspruch 5, **dadurch gekennzeichnet, dass** abhängig von Sensordaten (200) aus dem ersten Kanal (202), insbesondere mit einem neuronalen Netzwerk (406), eine Kodierung (410) von Sensordaten (200) aus dem ersten Kanal (202) bestimmt wird, wobei die erste Eingangsgröße (306) des Kodierers (302) abhängig von der Kodierung (410) der Sensordaten (200) aus dem Segment (206) der Sensordaten (200) des ersten Kanals (202) und der ersten Kanalpositionskodierung (408) und der ersten Zeitpositionskodierung (412) bestimmt wird (708).

7. Verfahren nach Anspruch 5 oder 6, **dadurch gekennzeichnet, dass** mit dem Dekodierer (304) Sensordaten (200) aus einem Segment (206) der vorhergesagten Sensordaten (200) bestimmt werden (714), wobei dem Segment (206) der vorhergesagten Sensordaten (200) eine zweite Zeitangabe zugeordnet ist, die einen Zeitraum (208) der Sensordaten (200) im Segment (206) der vorhergesagten Sensordaten (200) charakterisiert, wobei abhängig von der zweiten Zeitangabe (208), insbesondere mit demselben neuronalen Netzwerk (406) mit dem die erste Zeitpositionskodierung (412) bestimmt wird, oder mit einem neuronalen Netzwerk (406), eine zweite Zeitpositionskodierung (412) bestimmt wird (706), und wobei die zweite Eingangsgröße (310) des Dekodierers (304), abhängig von der zweiten Kanalpositionskodierung (408) und abhängig von der zweiten Zeitpositionskodierung (412) bestimmt wird (708).

8. Verfahren nach Anspruch 7, **dadurch gekenn-**

**zeichnet, dass** eine die zweite Zeitangabe umfassende Nutzereingabe erfasst wird (702).

9. Verfahren nach einem der Ansprüche 5 bis 8, **dadurch gekennzeichnet, dass** die Zeitangabe einen Start und ein Ende des Zeitraums (208) charakterisiert, oder dass die Zeitangabe einen Zeitpunkt oder Zeitindex umfasst, der dem Zeitraum (208) zugeordnet ist.

10. Verfahren nach einem der vorherigen Ansprüche, **dadurch gekennzeichnet, dass** eine Referenz für die vorhergesagten Sensordaten (200) bereitgestellt wird (602, 702), wobei der Kodierer (302) und/oder der Dekodierer (304) abhängig von einem Unterschied zwischen der Referenz und den vorhergesagten Sensordaten (312) trainiert werden (616, 716) und/oder wobei abhängig von einem Unterschied zwischen der Referenz und den vorhergesagten Sensordaten (312) eine Anomalie erkannt oder eine Kalibrierung durchgeführt wird.

11. Verfahren nach einem der vorherigen Ansprüche, **dadurch gekennzeichnet, dass** eine den vorgegebenen Text (502) umfassende Nutzereingabe erfasst wird (602, 702).

12. Verfahren nach einem der vorherigen Ansprüche, **dadurch gekennzeichnet, dass** die vorhergesagten Sensordaten (312) ausgegeben werden (616, 716), insbesondere die vorhergesagte Zeitreihe ausgegeben wird.

13. Vorrichtung (100) zur Verarbeitung von Sensordaten (200), insbesondere Zeitreihen von Sensordaten (200), **dadurch gekennzeichnet, dass** die Vorrichtung (100) wenigstens einen Prozessor (102) und wenigstens einen Speicher (104) umfasst, wobei der wenigstens eine Prozessor (102) ausgebildet ist, Instruktionen auszuführen, bei deren Ausführung die Vorrichtung (100) das Verfahren nach einem der vorherigen Ansprüche ausführt, wobei der wenigstens eine Speicher (104) die Instruktionen speichert.

14. Computerprogramm, **dadurch gekennzeichnet, dass** das Computerprogramm von einem Computer ausführbare Instruktionen umfasst, bei deren Ausführung durch den Computer der Computer das Verfahren nach einem der Ansprüche 1 bis 12 ausführt.

100

102

104

106

**Fig. 1**

208 208 208

204

206 206 206

202

208 208 208

204

206 206 206

202

200

208 208 208

204

206 206 206

202

**Fig. 2**

300

312

304

308

302

...

306 306 306

310

**Fig. 3**

300

204 404 408 306 412

402 406 406

208

410

406

206

**Fig. 4**

Fig. 5

```
┌─────────┐
│   602   │
└─────────┘
     │
     ▼
┌─────────┐
│   604   │
└─────────┘
     │
     ▼
┌─────────┐
│   606   │
└─────────┘
     │
     ▼
┌─────────┐
│   608   │
└─────────┘
     │
     ▼
┌─────────┐
│   610   │
└─────────┘
     │
     ▼
┌─────────┐
│   612   │
└─────────┘
     │
     ▼
┌─────────┐
│   614   │
└─────────┘
     │
     ▼
┌─────────┐
│   616   │
└─────────┘
```

Fig. 6

Fig. 7

Europäisches
Patentamt

European
Patent Office

Office européen
des brevets

**EUROPÄISCHER RECHERCHENBERICHT**

Nummer der Anmeldung

EP 24 19 2947

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZHOU XIAOMAO ET AL: "GenG: An LLM-Based Generic Time Series Data Generation Approach for Edge Intelligence via Cross-Domain Collaboration", IEEE INFOCOM 2024 - IEEE CONFERENCE ON COMPUTER COMMUNICATIONS WORKSHOPS (INFOCOM WKSHPS), IEEE, 20. Mai 2024 (2024-05-20), Seiten 1-6, XP034667146, DOI: 10.1109/INFOCOMWKSHPS61880.2024.10620716 [gefunden am 2024-08-13] * Seite 1; Abbildungen 2,5 * ----- | 1-14 | INV. G06N3/0455 G06N3/0475 |
| A | US 2023/186053 A1 (ANDONI SARI [US] ET AL) 15. Juni 2023 (2023-06-15) * Abbildung 3 * ----- | 1-14 | |
| | | | RECHERCHIERTE SACHGEBIETE (IPC) |
| | | | G06N |

Der vorliegende Recherchenbericht wurde für alle Patentansprüche erstellt

| Recherchenort | Abschlußdatum der Recherche | Prüfer |
|---|---|---|
| München | 14. Januar 2025 | Thielemann, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**   EP 24 19 2947

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-01-2025

| Im Recherchenbericht angeführtes Patentdokument | Datum der Veröffentlichung | Mitglied(er) der Patentfamilie | Datum der Veröffentlichung |
|---|---|---|---|
| US 2023186053 A1 | 15-06-2023 | US 2023186053 A1 | 15-06-2023 |
| | | WO 2023107836 A1 | 15-06-2023 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ZHANG, YUNHAO** ; **JUNCHI YAN**. Crossformer: Transformer utilizing cross-dimension dependency for multivariate time series forecasting. *The Eleventh International Conference on Learning Representations.*, 2022, https://open-review.net/pdf?id=vSVLM2j9eie